# EUROPÄISCHE PATENTSCHRIFT

(11) **EP 3 756 801 B1**
(45) Veröffentlichungstag und Bekanntmachung des Hinweises auf die Patenterteilung: **29.09.2021**
(21) Anmeldenummer: 20164897.9
(22) Anmeldetag: 23.03.2020
(51) Int. Cl.: B23B 27/08, B23B 29/04

(54) **KLEMMHALTER**
CLAMP HOLDER
SUPPORT DE PINCE

(30) Priorität: 24.06.2019 DE 102019116864
(43) Veröffentlichungstag der Anmeldung: 30.12.2020
(73) Patentinhaber: ZCC Cutting Tools Europe GmbH, 40472 Düsseldorf (DE)
(72) Erfinder: Agustin-Paya, José, 45478 Mülheim an der Ruhr (DE); Weißschnur, Jan, 40221 Düsseldorf (DE)
(74) Vertreter: Patentanwälte Vomberg & Schart

(56) Entgegenhaltungen:
- EP-A1- 3 231 541
- DE-A1-102017 110 132
- DE-U1- 8 413 840
- IT-A1- UB20 152 404
- KR-A- 20130 123 312
- US-A- 174 216
- US-A1- 2009 142 149
- US-A1- 2013 170 918

## Beschreibung

Die Erfindung betrifft einen Klemmhalter gemäß dem Oberbegriff des Anspruchs 1. Ein derartiger Klemmhalter ist zum Beispiel aus der DE 10 2017 110132 A1 bekannt.

Solche Klemmhalter werden insbesondere für Schneideinsätze benötigt, die zum Stech- und Längsdrehen sowie für Abstech- und Abtrennvorgänge an einem rotierenden Werkstück eingesetzt werden. Die Schneideinsätze, die bei der Zerspanung einen Verschleiß unterliegen, müssen spätestens dann ausgewechselt werden, wenn aufgrund des Verschleißes die nötige Fertigungsgenauigkeit beim Zerspanen nicht mehr gewährleistet ist. Kommt es aufgrund eines erhöhten Verschleißes zu einem Schneidkantenbruch, kann dies beim fortgesetzten Zerspanen dazu führen, dass das Werkstück unbrauchbar wird. Um eine selbsttätige Klemmspannung, ein einfaches Auswechseln und Einsetzen der Schneideinsätze zu ermöglichen und andererseits eine optimale Halterung zu gewährleisten, wird daher in der DE 32 19 150 C3 ein Stechwerkzeug mit einer Aufnahmeöffnung vorgeschlagen, bei der eine rückwärtige erweiterte Ausnehmung vorgesehen ist, die eine schmale Brücke zur oberen Kante der oberen Klemmbacke bildet, so dass der Schnittdruck durch hebelartiges Verschwenken der oberen Klemmbacke zu einer proportionalen Erhöhung der Klemmspannung führt. Die Klemmfläche der oberen Klemmbacke soll gegenüber der Klemmfläche des Schneideinsatzes leicht nach innen ansteigen. Zum Entnehmen des Schneideinsatzes durch Aufspreizen der Klemmschenkel wird ein elliptischer Schlüssel in die rückwärtige erweiterte Ausnehmung gesteckt und durch entsprechendes Verdrehen die obere Klemmbacke abgespreizt.

Einen Halter mit einer durch eine untere und eine obere Klemmbacke sowie einen hinteren Anschlag definierten Aufnahmeöffnung, der sich ein L-förmiger Schlitz anschließt, wird auch in der DE 39 06 822 C3 beschrieben. Im Knickbereich des L-förmigen Schlitzes ist eine ovale Form gewählt, welche als Führung für den Aufspreizschlüssel mit elliptischen Querschnittsprofilen beim Aufspreizen der Klemmbacken dient.

In der DE 199 55 581 B4 wird ein Schneideinsatz-Klemmhalter beschrieben, der eine untere Basisbacke sowie eine elastisch abspreizbare obere Klemmbacke aufweist, die zusammen mit einem hinteren Anschlag eine Aufnahmeöffnung für einen Schneideinsatz bilden. Der obere Klemmarm besitzt zwei durch eine Aussparung unterbrochene Einspannflächen. Oberhalb des hinteren Anschlags erstreckt sich eine L-förmig ausgebildete breite Öffnung; eine weitere Öffnung soll sich unterhalb des hinteren Anschlags befinden. Die obere L-förmige Öffnung ist derart gestaltet, dass sie sich in einer Richtung nach oben und vorne erstreckt, wodurch zum einen ein schmaler Überbrückungsabschnitt zur oberen Kante des oberen Klemmarms und ein zweiter schmaler Überbrückungsabschnitt zwischen dem sich nach vorne erstreckenden Teil und der hinteren Einspannfläche ergibt. Eine solche Konstruktion hat aufgrund der filigranen Ausbildung der Überbrückungsabschnitte den Nachteil, dass der Schneideinsatz nicht sicher gehalten werden kann.

Weitere nach dem Stand der Technik bekannte Ausführungsformen, bei denen sich im rückwärtigen Bereich der Aufnahmeöffnung ein schmaler Schlitz erstreckt, der die Elastizität des oberen Klemmbackens gewährleisten soll, haben den Nachteil, dass sich in diesem Schlitz Späne festsetzen, welche zu einer Fehlfunktion des Werkzeuges führen kann.

Die US 174216 beschreibt ein Sägeblatt mit mehreren beabstandeten Aufnahmeöffnungen zur lösbaren Einspannung von Schneideinsätzen. Die Aufnahmeöffnungen besitzen eine obere und eine untere Klemmfläche sowie einen hinteren Anschlag. Im rückwärtigen Bereich schließt sich neben und hinter dem Anschlag eine Erweiterung sowie im Fortlauf ein bogenförmig gekrümmter Schlitz mit einer kreisförmigen Erweiterung an dessen Ende an. Die Elastizität der unteren Klemmfläche einer jeden Aufnahmeöffnung wird jeweils durch einen zusätzlichen Schlitz mit einer endseitigen kreisförmigen Erweiterung gewährleistet, der im Abstand zur Aufnahmeöffnung angeordnet ist.

Es ist Aufgabe der vorliegenden Erfindung, einen Klemmhalter der eingangs genannten Art zu schaffen, der eine ausreichende Stabilität, eine hohe Elastizität des oberen Klemmbackens sowie eine optimale Lagesicherung des eingeklemmten Schneideinsatzes beim Zerspanen gewährleistet. Der Klemmhalter soll zudem preiswert herstellbar sein.

Zur Lösung dieser Aufgabe wird der Klemmhalter nach Anspruch 1 vorgeschlagen. Dieser ist erfindungsgemäß dadurch gekennzeichnet, dass sich an ein über eine kurze Distanz ausgebildeten Schlitz und an die Erweiterung in deren hinteren oberen Bereich mindestens 3 bis 20 bogenförmige oder als offener Polygonzug ausgebildete, parallel zueinander verlaufende Schlitze anschließen, die - von einer Vorderseite des Klemmhalters betrachtet - in einer Linkskrümmung über einen Winkel von mindestens 120° verlaufen. Anders ausgedrückt, die bogenförmig oder polygonförmig ausgebildeten Schlitze erstrecken sich in deren Fortlauf in Richtung des vorderen Endes des Klemmschlitzes.

Vorzugsweise erstreckt sich der Winkel der bogenförmigen oder als Polygonzug ausgebildeten Schlitze bis zu 180°.

Die Elastizität des oberen Klemmfingers wird dadurch verbessert, dass drei Schlitze bis zwanzig Schlitze, vorzugsweise drei bis fünf bogenförmige oder polygonartige Schlitze vorgesehen sind, die parallel zueinander verlaufen. Bei einer plattenförmigen Ausbildung des Klemmhalters können solche bogenförmige oder polygonartige Schlitze leicht durch Lasererosion hergestellt werden, wobei gegebenenfalls mehrere übereinander gestapelte Klemmhalter gleichzeitig bearbeitet werden können. Durch die Erweiterung, welche sich hinter dem Anschlag für den Schneideinsatz befindet, ist ein hinreichend großer Raum geschaffen, über den die Späne leicht abgeführt werden können, so dass die Späne erst gar nicht in den Bereich gelangen, in dem die bogenförmigen oder polygonartigen Schlitze angeordnet sind. Bevorzugt wird eine leicht zu fertigende halbkreisförmige Ausbildung der Schlitze, die auf der einen Seite eine optimale Elastizität des oberen Klemmarmes ermöglicht, andererseits schmale Brücken im Bereich des oberen Klemmarmes verhindert, welche zu einer instabilen Halterung des Schneideinsatzes beim Zerspanen führen können.

Die Breite der bogenförmigen oder polygonartigen Schlitze soll vorzugsweise zwischen 0,1 mm bis 3 mm liegen.

Insbesondere soll der oberste der drei bis zwanzig bogenförmigen Schlitze teilweise oberhalb der durch die Klemmbacken definierten Klemmebenen verlaufen.

Nach einer Weiterbildung der Erfindung ist der Klemmhalter plattenförmig ausgebildet und besitzt mehrere, vorzugsweise drei mit Ansenkungen versehene Durchbrechungen zur Durchführung einer Befestigungsschraube. Der Klemmhalter wird in diesem Fall an einer Trägerkassette angeschraubt, die wiederrum an einem Grundhalter befestigt ist. Durch diese Maßnahme kann der Klemmhalter separat entnommen werden, etwa dann, wenn aufgrund der starken mechanischen Beanspruchung beim Zerspanen der Klemmhalter verschlissen ist und ausgetauscht werden muss. Die getrennte Ausbildung des Grundhalters, einer Trägerkassette sowie des Klemmhalters schafft auch die Möglichkeit, den Klemmhalter aus einem Material zu fertigen, das gegen einen Verschleiß widerstandsfähig ist, z.B. einen hochwertigen Chrom-Stahl zu verwenden. Die Trägerkassette sowie der Grundhalter können demgegenüber aus einem einfachen, preiswerteren Stahl hergestellt werden, was die Gesamtkosten insgesamt minimiert.

Nach einer weiteren Ausgestaltung der Erfindung kann der Klemmhalter in der oberen Klemmbacke einen Kühlmittelkanal für eine Kühlflüssigkeit aufweisen. Der Kühlmittelkanal mündet in die Vorderseite der Klemmbacken, was gewährleistet, dass die Kühlflüssigkeit gezielt in den Zerspanungsbereich geleitet werden kann.

Es können bei Bedarf, unter Nutzung desselben Halters und derselben Trägerkassette, auch Klemmhalter mit einer größeren als der dargestellten Breite benutzt werden. Bei der Wahl der Klemmhalter ist die Breite des zu fertigenden Einstiches zu berücksichtigen.

Vorzugsweise ist der Klemmhalter an einer Trägerkassette angeschraubt, deren Vorderseite eine ebene Anlagefläche für den Klemmhalter bildet und dessen Rückseite ein geriffeltes Verzahnungsprofil aufweist, dessen Verzahnung schräg zur Längs- oder Querachse, vorzugsweise unter einem Winkel von 45° angeordnet ist, wobei der Grundhalter an der der Trägerkassette zugewandten Seite ein entsprechendes Verzahnungsprofil aufweist, das im montierten Zustand formschlüssig in das Verzahnungsprofil der Trägerkassette eingreift. Durch diese Ausgestaltung können die bei Einstechoperationen sowohl in vertikaler als auch in Querrichtung auftretenden Kräfte besser abgefangen werden.

Um eine optimale Ausrichtung der Werkzeugteile zueinander zu gewährleisten, weist die Trägerkassette an Ihrer Rückseite eine mittlere Ausnehmung zur lösbaren Aufnahme einer Passfeder auf, die als Anschlag zur lagegenauen Positionierung der Trägerkassette in Bezug auf den Werkzeuggrundhalter dient.

Weitere Ausgestaltungen sowie Vorteile der vorliegenden Erfindung werden anhand der Zeichnungen beschrieben. Es zeigen:
- Fig. 1: ein komplettes Werkzeug, bestehend aus einem Grundhalter, einer Trägerkassette, einem Klemmhalter mit eingeklemmtem Schneideinsatz,
- Fig. 2: dieselbe Ansicht ohne Schneideinsatz und ohne Klemmpratze,
- Fig. 3: einen Grundhalter mit montierter Trägerkassette,
- Fig. 4: den Grundhalter mit eingelegter Passfeder,
- Fig. 5: die Rückseite der Trägerkassette,
- Fig. 6: die Rückseite des Klemmhalters,
- Fig. 7: eine perspektivische Ansicht der Klemmpratze und
- Fig. 8: eine Explosionszeichnung des kompletten Werkzeugs.

Werkzeuggrundhalter mit einem Anschluss an eine Werkzeugmaschine, z.B. einem HSK-Hohlschaftkegel sowie einer entsprechenden Kühlmittelzufuhr sind im Prinzip nach dem Stand der Technik bekannt. Im vorliegenden Fall setzt sich das komplette Werkzeug aus dem Werkzeuggrundhalter 10, einer Trägerkassette 11, an der eine Spannpratze 12 befestigt wird und einem Klemmhalter 13 zusammen, in den ein Schneideinsatz 14 eingespannt ist. Der Klemmhalter besitzt drei Bohrungen 15, 16, 17 mit Ansenkungen, durch welche Schrauben mit einem Ansenkkopf gesteckt und zur Verschraubung mit der Trägerkassette 11 verwendet werden können. Durch einen leichten Versatz der Bohrungen 15, 16, 17 gegenüber den Gewindebohrungen in der Trägerkassette kann - wie im Prinzip nach dem Stand der Technik bekannt - gewährleistet werden, dass der Klemmhalter bei einer Betätigung der Spannschraube in die gewünschte Endlage gezogen wird.

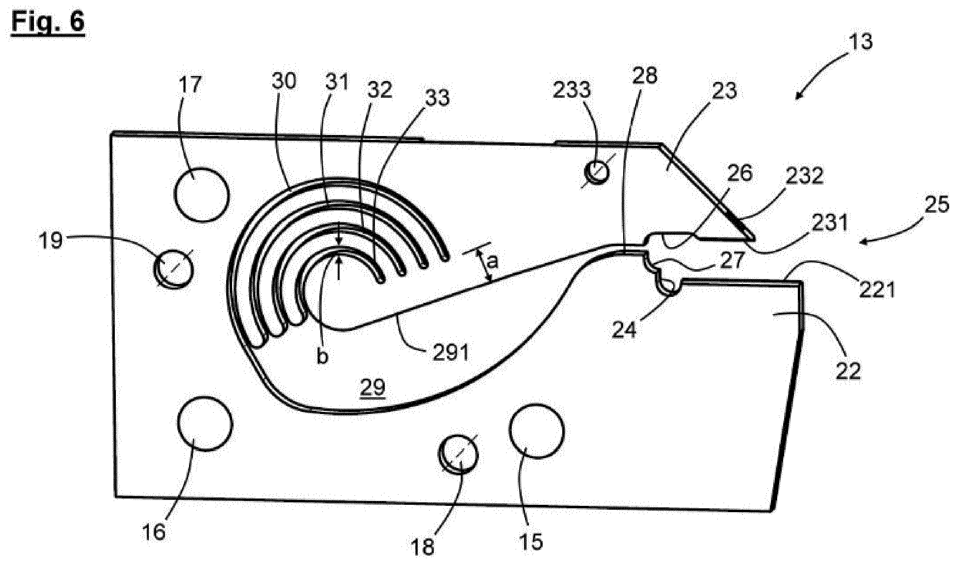

Die weiteren Bohrungen 18, 19 (siehe Fig. 6) dienen dazu, eine erste Positionierung des Klemmhalters über die aus der Trägerkassette 11 ragenden Bolzen 20, 21 sicherzustellen. Hierzu werden die Bohrungen 18, 19 im Durchmesser größer gewählt als der Durchmesser der Bolzen 20, 21.

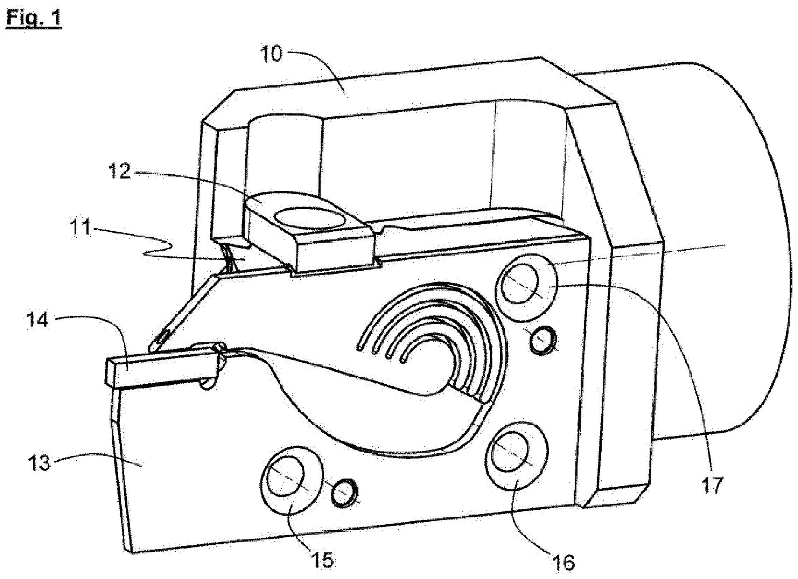

Wie sich im Einzelnen aus Fig. 1 und 6 ergibt, besitzt der Klemmhalter 13 eine untere Klemmbacke 22 und eine obere Klemmbacke 23, die zusammen mit einem hinteren Anschlag 24 eine Aufnahmeöffnung 25 für den Schneideinsatz 14 bilden. Die Klemmflächen 221, 231 der genannten Klemmbacken sind gewölbt oder prismatisch ausgebildet und greifen in entsprechende Ausnehmungen des Schneideinsatzes 14 an dessen Ober- und Unterseite ein.

Zudem besitzt der obere Klemmarm noch eine Kühlmittelauslassöffnung 232 sowie einen nicht dargestellten Kühlkanal, der von der Einlassöffnung 233 bis zum Auslass 232 geführt wird. Im Anschluss an den Anschlag 24 beziehungsweise abgerundeter weiterer Ausnehmungen 26, 27 ist ein kurzer Schlitz 28 einer Länge von 2 mm bis 15 mm, vorzugsweise maximal 5 mm vorgesehen. Hieran schließt sich eine Erweiterung 29 an, die sich in einen Bereich erstreckt, der sich unterhalb der durch die Klemmflächen 231, 221 gebildeten Ebenen erstreckt. Dieser Bereich gewährleistet - bei gleichzeitiger kurzer Ausbildung des Schlitzes 28 - dass abgespülte Späne leicht abgeführt werden können. Die Länge der Erweiterung liegt zwischen 40 mm und 80 mm, deren Höhe zwischen 10 mm bis 25 mm, vorzugsweise zwischen 10 mm und 20 mm. An dem oberen Bereich der Erweiterung 29 schließen sich am hinteren Ende jeweils im gleichen Abstand Schlitze 30 bis 33 an, welche eine geringe Breite b von 0,1 mm bis 3 mm besitzen und einen Winkelbereich von 180° beschreiben. Diese halbkreisförmig ausgebildeten Schlitze enden in einem Abstand a von der Oberkante 291 der Erweiterung 29. Die Schlitze 30 bis 33 gewährleisten die Elastizität des oberen Klemmarms 23 ohne Stabilitätseinbußen des Klemmhalters. Statt der halbkreisförmigen Schlitze können auch offene Polygonzüge verwendet werden, die zumindest über ein Winkelmaß von 120° (oder mehr) verlaufen. Wesentlich ist jedenfalls, dass diese Schlitze fernab von dem Schneideinsatz im Anschluss an den hinteren oberen Bereich der Erweiterung 29 auslaufen und sich etwa bogenförmig (beziehungsweise polygonförmig) soweit erstrecken, dass deren Ende in Richtung der Ausnehmung 29 weist. Der Klemmhalter, der im vorliegenden Fall plattenförmig ausgebildet ist, kann für radiale Einstiche auch im Längsquerschnitt gekrümmt ausgebildet sein.

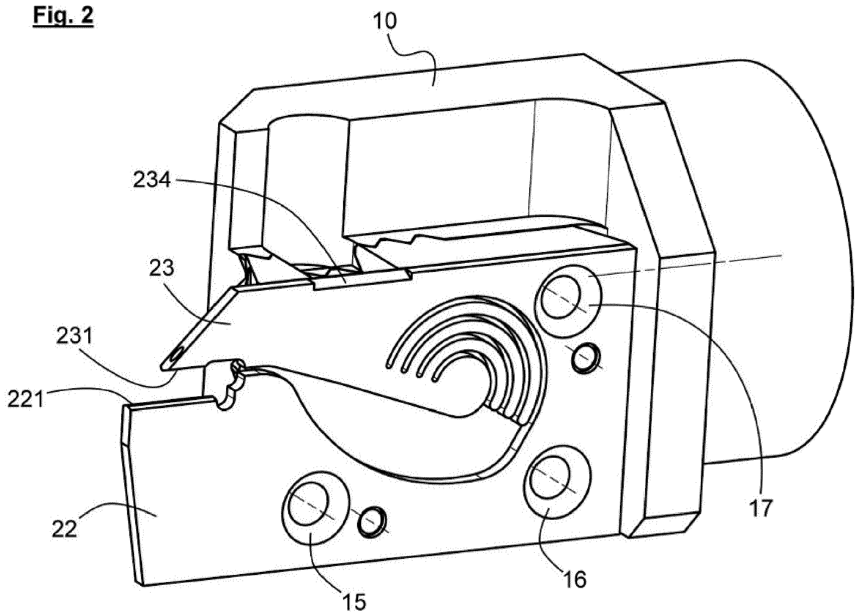

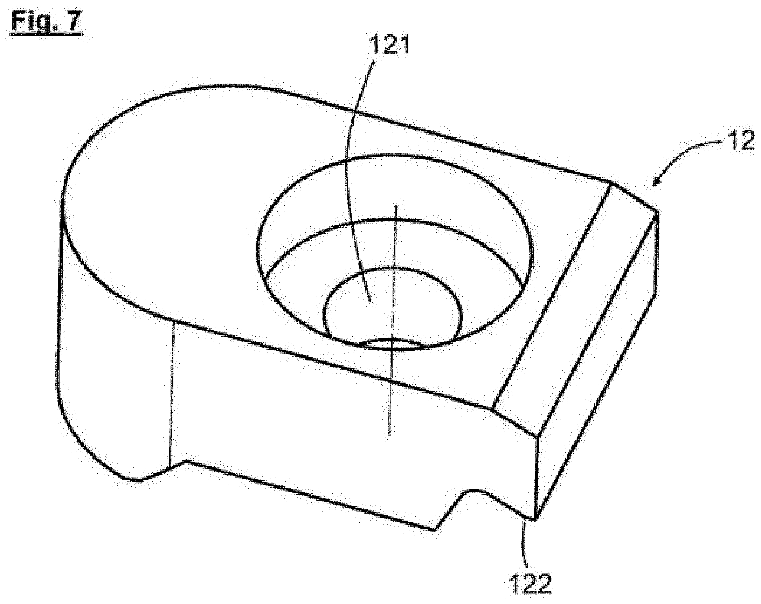

Wie Fig. 2 zu entnehmen ist, besitzt die obere Klemmbacke 23 eine Abschrägung 234, auf weiche die Klemmpratze 12 im Spannzustand einwirkt und den Klemmhalter so fixiert, dass der obere Klemmarm 23 den Schneideinsatz 14 sicher haltert. Die Klemmspratze 12 besitzt, wie Fig. 7 zu entnehmen ist, eine abgestufte Bohrung 121 zur Aufnahme einer nicht dargestellten Schraube, mit der die Klemmpratze an der Trägerkassette 11 befestigt werden kann. Die Klemmpratze ist an ihrem vorderen, dem Klemmhalter zugewandten Ende mit einer vorstehenden Klemmlippe 122 versehen, die auf die Abschrägung 234 einwirkt.

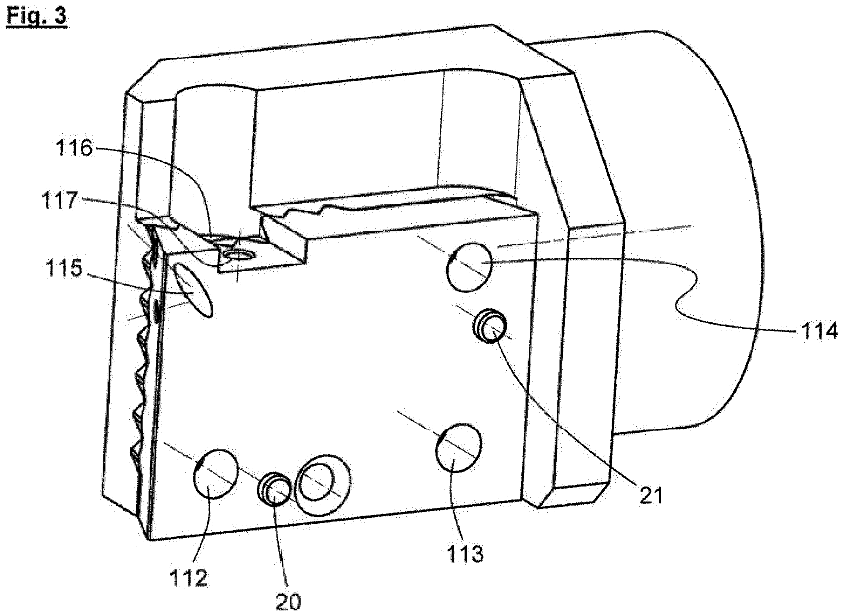

Wie Fig. 3 zu entnehmen ist, besitzt die Trägerkassette an der Seite, die dem plattenförmigen Klemmhalter zugewandt ist, eine im Wesentlichen ebene Anlagefläche 11, die lediglich durch die bereits genannten Bolzen 20, 21 sowie die Sacklochgewindebohrungen 112, 113, 114 durchbrochen wird. Die Öffnung 115 steht in Verbindung mit der Öffnung 233 (siehe Fig. 6) zur Zufuhr und Weiterleitung des Kühlmittels.

Die Kassette besitzt ferner eine Ausnehmung 116 mit einer hierin angeordneten Gewindebohrung 117 zur Aufnahme beziehungsweise Befestigung der Spannpratze beziehungsweise der Schraube zur Spannpratzenbefestigung.

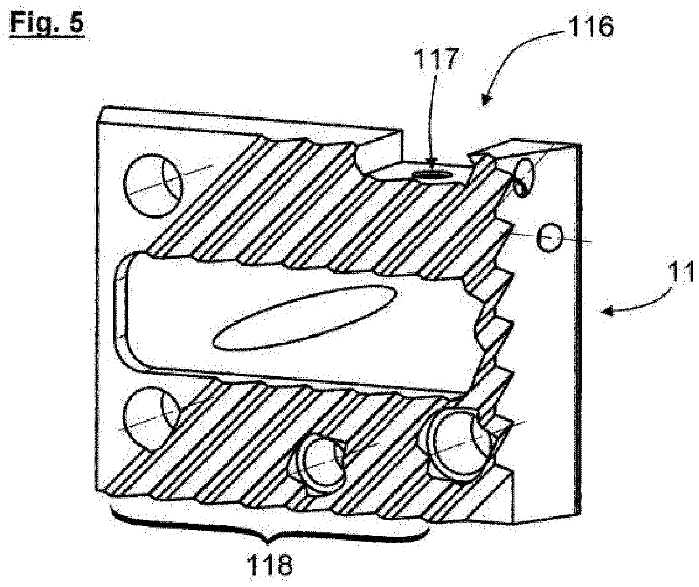

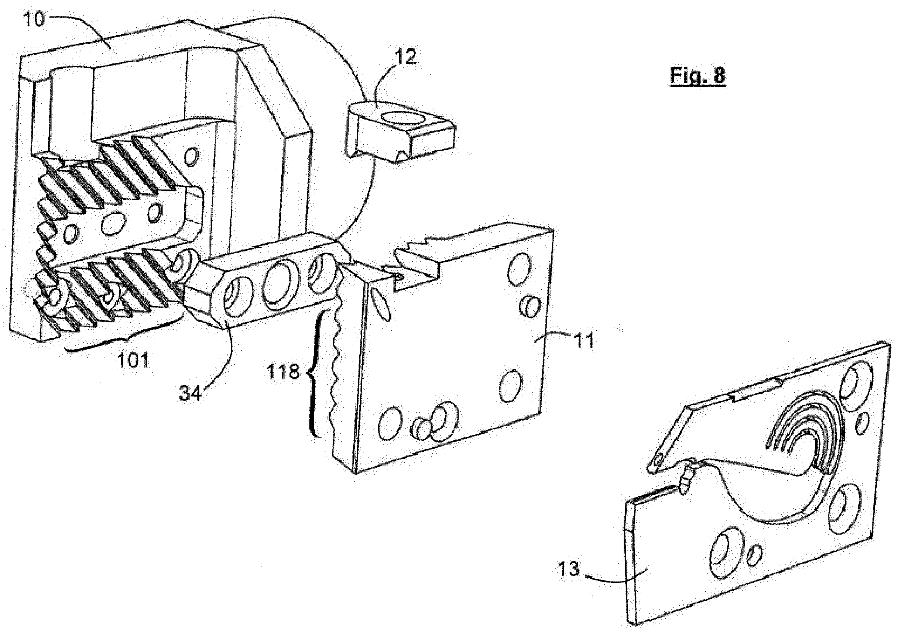

Die Fig. 5 entnehmbare Rückseite der Trägerkassette 11 zeigt ein geriffeltes Profil 118, dessen Verzahnung schrägwinklig verläuft. Dieses Profil liegt formschlüssig an einem Profil 101 des Grundhalters 10 (siehe Fig. 8) an. Der Grundhalter 10 sowie die Kassette 11 besitzen noch eine zentrale Ausnehmung zur Aufnahme einer Passfeder 34, die gleichzeitig als Anschlag für die Trägerkassette bei der Verspannung dient.

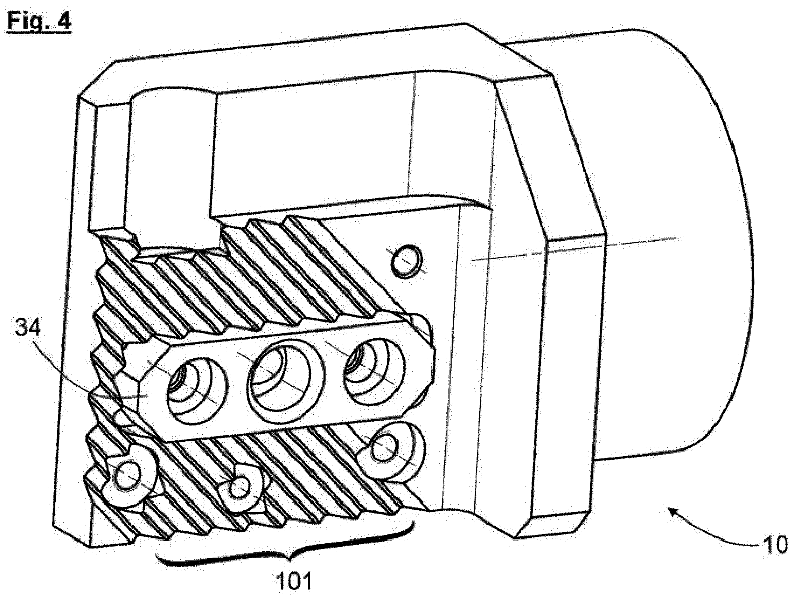

Fig. 4 zeigt den Grundhalter 10 ohne die Passfeder 34.

Beim Zusammenbau des kompletten, in Fig. 1 dargestellten Werkzeugs wird zunächst in den Grundhalter 10 die Passfeder 34 eingesetzt und anschließend die Trägerkassette 11 aufgesetzt, die über nicht dargestellte Schrauben am Grundhalter 10 befestigt wird. Das in einer 45°-Anordnung geriffelte Profil 101 des Grundhalters greift hierbei in die Profilierung 118 der Kassette 11 ein und dient aufgrund der gewählten Winkellage dazu, auftretende vertikale und horizontale Kräfte besser abzufangen als dies nach dem Stand der Technik bei bekannten Grundhaltern möglich war. Nach der Montage der Trägerkassette 11 wird der Klemmhalter 13 aufgesetzt und mit Spannschrauben an der Trägerkassette 11 befestigt. Anschließend wird, ggf. unter Zuhilfenahme eines Aufspreizschlüssels die obere Klemmbacke angehoben und der als Stecheinsatz ausgebildete Schneideinsatz 14 bis zum Anschlag 24 eingeschoben. Hiernach wird die Spannpratze 12 montiert und mittels einer Spannschraube angezogen, wodurch eine sichere Lagefixierung des Schneideinsatzes 14 beim Zerspanen gewährleistet wird.

Bei einem Verschleiß des Schneideinsatzes 14 wird in umgekehrter Reihenfolge verfahren, d.h. dass zunächst die Spannpratze 12 gelöst und anschließend, ggf. unter leichtem Abspreizen der oberen Klemmbacke der Schneideinsatz aus der Fixierung gelöst und durch einen neuen Schneideinsatz ersetzt wird. Sollte in Folge der starken Beanspruchung bei fortlaufenden Zerspanungsoperationen auch der Klemmhalter beschädigt sein, kann der Klemmhalter von der Trägerkassette gelöst und durch einen neuen Klemmhalter ersetzt werden. Im Regelfall ist ein Austausch der Trägerkassette und/oder des Grundhalters nicht erforderlich.

## Patentansprüche

1. Klemmhalter mit einer Aufnahmeöffnung (25) zur lösbaren Einspannung eines Schneideinsatzes (14), die durch eine untere Klemmbacke (22), eine dieser gegenüberliegenden oberen Klemmbacke (23) sowie einen hinteren Anschlag (24) definiert ist, wobei sich im rückwärtigen Bereich der Aufnahmeöffnung (25) neben dem hinteren Anschlag (24) aufeinanderfolgend ein Schlitz (28) sowie eine Erweiterung (29) anschließen, durch deren Ausbildung die obere Klemmbacke (23) gegenüber der unteren Klemmbacke (22) abspreizbar ist,
**dadurch gekennzeichnet, dass**
sich an dem oberen Bereich der Erweiterung (29) mindestens drei bis zwanzig bogenförmig oder als offener Polygonzug ausgebildete parallel zueinander verlaufende Schlitze (30, 31, 32, 33) anschließen, die - von einer Vorderseite des Klemmhalters betrachtet - in einer Linkskrümmung über einen Winkel von mindestens 120° verlaufen.

2. Klemmhalter nach Anspruch 1, **dadurch gekennzeichnet, dass** der Winkel, über den sich die Schlitze (30, 31, 32, 33) erstrecken, bis zu 180° beträgt.

3. Klemmhalter nach Anspruch 1 oder 2, **dadurch gekennzeichnet, dass** drei bis fünf bogenförmige oder polygonzugartige Schlitze (30 bis 33) vorgesehen sind, die parallel zueinander verlaufen.

4. Klemmhalter nach einem der Ansprüche 1 bis 3, **dadurch gekennzeichnet, dass** die Breite (b) der bogenförmigen oder polygonartigen Schlitze (30 bis 33) 0,1 mm bis 3 mm beträgt.

5. Klemmhalter nach einem der Ansprüche 1 bis 4, **dadurch gekennzeichnet, dass** der oberste der drei bis zwanzig Schlitze teilweise oberhalb der Klemmebenen verläuft, die durch die Klemmbacken (22, 23) definiert werden.

6. Klemmhalter nach einem der Ansprüche 1 bis 5, **dadurch gekennzeichnet, dass** der Klemmhalter plattenförmig ausgebildet ist und mehrere, vorzugsweise drei mit Ausnehmungen versehene Durchbrechungen (15, 16, 17) zur Durchführung einer Befestigungsschraube besitzt.

7. Klemmhalter nach einem der Ansprüche 1 bis 6, **dadurch gekennzeichnet, dass** in der oberen Klemmbacke (23) ein Kühlmittelkanal für eine Kühlflüssigkeit verläuft, der in eine Vorderseite der Klemmbacke mündet.

## Claims

1. Clamp holder with a receiving opening (25) for releasably clamping a cutting insert (14), which is defined by a lower clamping jaw (22), an upper clamping jaw (23) opposite this and a rear stop (24), the receiving opening in the rear area (25) next to the rear stop (24) successive lining up a slot (28) and an extension (29), the design of which allows the upper clamping jaw (23) to be spread apart from the lower clamping jaw (22),
**characterized in that**
the upper area of the extension (29) is followed by at least three to twenty arcuate or open polygonal slot (30, 31, 32, 33) which - viewed from the front of the clamp holder - run in a left curve over an angle of at least 120°.

2. Clamp holder according to Claim 1, **characterized in that** the angle over which the slots (30 to 33) run is up to 180°.

3. Clamp holder according to Claim 1 or 2, **characterized in that** three to five, arcuate or polygonal slots (30 to 33) are provided which run parallel to one another.

4. Clamp holder according to one of Claims 1 to 3, **characterized in that** the width (b) of the arcuate or polygonal slots (30 to 33) is 0.1 mm to 3 mm.

5. Clamp holder according to one of Claims 1 to 4, **characterized in that** the uppermost of the three to twenty arcuate slots (30) runs partially above the clamping plane defined by the clamping jaws (22, 23).

6. Clamping jaw according to one of Claims 1 to 5, **characterized in that** the clamping holder is plate-shaped and has several, preferably three, openings (15, 16, 17) provided with recesses for the passage of a fastening screw.

7. Clamp holder according to one of Claims 1 to 6, **characterized in that** a coolant channel for a cooling liquid runs in the upper clamping jaw (23) and opens into the front of the clamping jaw.

## Revendications

1. Support de serrage ayant une ouverture de réception (25) destinée à serrer de manière amovible un insert de coupe (14) et qui est définie par une mâchoire inférieure de serrage (22), une mâchoire supérieure de serrage (23) située en regard de celle-ci ainsi que par une butée arrière (24), dans lequel la zone arrière de l'ouverture de réception (25), à côté de la butée arrière (24), est suivie successivement d'une fente (28) ainsi que d'un évasement (29) dont la conception permet d'écarter la mâchoire supérieure de serrage (23) par rapport à la mâchoire inférieure de serrage (22),
**caractérisé par le fait que** la zone supérieure de l'évasement (29) est suivie d'au moins trois à vingt fentes (30, 31, 32, 33) en forme d'arc ou réalisées en tant que ligne polygonale ouverte qui - vues depuis une face avant du support de serrage - s'étendent en une courbure gauche sur un angle d'au moins 120°.

2. Support de serrage selon la revendication 1, **caractérisé par le fait que** l'angle sur lequel s'étendent les fentes (30 à 33) va jusqu'à 180°.

3. Support de serrage selon la revendication 1 ou 2, **caractérisé par le fait qu'**il est prévu trois à cinq fentes (30 à 33) en forme d'arc ou de type de ligne polygonale qui s'étendent parallèlement les unes aux autres.

4. Support de serrage selon l'une quelconque des revendications 1 à 3, **caractérisé par le fait que** la largeur (b) des fentes (30 à 33) en forme d'arc ou de type de ligne polygonale est comprise entre 0,1 mm et 3 mm.

5. Support de serrage selon l'une quelconque des revendications 1 à 4, **caractérisé par le fait que** la fente la plus haute des trois à vingt fentes s'étend en partie au-dessus des plans de serrage qui sont définis par les mâchoires de serrage (22, 23).

6. Support de serrage selon l'une quelconque des revendications 1 à 5, **caractérisé par le fait que** le support de serrage est conçu en forme de plaque et présente plusieurs, de préférence trois percées (15, 16, 17) qui sont munies d'évidements et destinées à faire passer une vis de fixation.

7. Support de serrage selon l'une quelconque des revendications 1 à 6, **caractérisé par le fait qu'**un canal d'agent de refroidissement pour un liquide de refroidissement s'étend dans la mâchoire supérieure de serrage (23) et débouche dans une face avant de la mâchoire de serrage.
